(19) Europäisches Patentamt
European Patent Office
Office européen des brevets

(11) **EP 4 293 787 A1**

(12) **EUROPEAN PATENT APPLICATION**
published in accordance with Art. 153(4) EPC

(43) Date of publication:
**20.12.2023 Bulletin 2023/51**

(21) Application number: **21936039.3**

(22) Date of filing: **08.04.2021**

(51) International Patent Classification (IPC):
***H01M 10/0569** (2010.01)* ***H01M 4/62** (2006.01)*
***H01M 50/42** (2021.01)* ***H01M 50/46** (2021.01)*

(52) Cooperative Patent Classification (CPC):
**H01M 4/62; H01M 10/0569; H01M 50/42; H01M 50/46;** Y02E 60/10

(86) International application number:
**PCT/JP2021/014933**

(87) International publication number:
**WO 2022/215235 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **LG ENERGY SOLUTION, LTD.**
**Seoul 07335 (KR)**

(72) Inventors:
- **MIKUNI Hiroki**
  **Tokyo 100-6606 (JP)**
- **KURODA Naoto**
  **Tokyo 100-6606 (JP)**

(74) Representative: **Hoffmann Eitle**
**Patent- und Rechtsanwälte PartmbB**
**Arabellastraße 30**
**81925 München (DE)**

# (54) LITHIUM ION SECONDARY BATTERY AND SEPARATION MEMBRANE

(57) One aspect of the present invention provides a lithium ion secondary battery which sequentially comprises a positive electrode mixture layer, a separation membrane, and a negative electrode mixture layer in the stated order, wherein: the positive electrode mixture layer contains a positive electrode active material, a first lithium salt, and a first solvent; the negative electrode mixture layer contains a negative electrode active material, a second lithium salt, and a second solvent that is different from the first solvent; and the separation membrane contains a third lithium salt and a polymer that comprises, as a monomer unit, a monomer represented by formula (1).

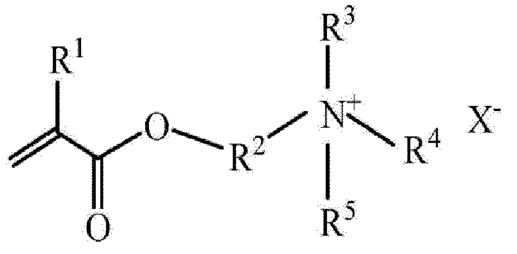

(1)

[wherein, in formula (1), $R^1$ represents a hydrogen atom or a methyl group, $R^2$ represents a divalent organic group, $R^3$, $R^4$ and $R^5$ each independently represents a hydrogen atom or a monovalent organic group, and $X^-$ represents a counter anion.]

EP 4 293 787 A1

## Description

## [TECHNICAL FIELD]

The present invention relates to a lithium ion secondary battery and a separation membrane.

## [BACKGROUND]

In recent years, with the spread of portable electronic devices, electric vehicles, and the like, secondary batteries typified by lithium ion secondary batteries are required to further improve the performance. For example, technology for improving the performance of lithium ion secondary batteries by containing different types of electrolytes in the positive electrode and the negative electrode is being considered (e.g., Patent Literature 1).

[Prior Art Literature]

[Patent Literature]

Patent Literature 1: Japanese Unexamined Patent Publication No. 2001-110447

## [DETAILED DESCRIPTION OF THE INVENTION]

## [Technical Problem]

In a lithium ion secondary battery in which different types of electrolytes are contained in the positive electrode and the negative electrode, it is important that the solvent contained in the electrolyte is sufficiently separated without mixing with each other between the positive electrode and the negative electrode. The present inventors considered disposing a separation membrane between the positive electrode and the negative electrode in order to separate the solvent in the electrolyte in such a lithium ion secondary battery. In this separation membrane, it is necessary that lithium ions pass through the separation membrane, but the solvent in the electrolyte has characteristics of being hardly passed through the separation membrane, i.e. lithium ion conductivity and solvent separation capability.

It is an object of the present invention to provide a separation membrane having excellent separation ability of solvents and lithium ion conductivity, which is used in a lithium ion secondary battery configured to contain mutually different solvents in a positive electrode mixture layer and a negative electrode mixture layer, and a lithium ion secondary battery comprising the separation membrane.

## [Technical Solution]

According to one aspect of the present invention, there is provided a lithium ion secondary battery comprising a positive electrode mixture layer, a separation membrane, and a negative electrode mixture layer in the stated order, wherein: the positive electrode mixture layer contains a positive electrode active material, a first lithium salt, and a first solvent, the negative electrode mixture layer contains a negative electrode active material, a second lithium salt, and a second solvent different from the first solvent, and the separation membrane contains a third lithium salt and a polymer that comprises, as a monomer unit, a monomer represented by formula (1).

[Chemical Formula 1]

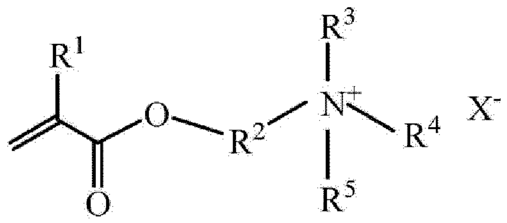 (1)

wherein, in formula (1), $R^1$ represents a hydrogen atom or a methyl group, $R^2$ represents a divalent organic group, $R^3$, $R^4$ and $R^5$ each independently represents a hydrogen atom or a monovalent organic group, and $X^-$ represents a counter

anion.

According to another aspect of the present invention, there is provided a separation membrane for being disposed between a positive electrode mixture layer and a negative electrode mixture layer, in a lithium ion secondary battery comprising a positive electrode mixture layer that contains a positive electrode active material, a first lithium salt and a first solvent, and a negative electrode mixture layer that contains a negative electrode active material, a second lithium salt and a second solvent different from the first solvent, wherein the separation membrane contains a third lithium salt and a polymer that comprises, as a monomer unit, a monomer represented by the formula (1).

The third lithium salt may comprise $LiN(SO_2CF_3)_2$. The content of the third lithium salt may be 10% by mass or less based on the total amount of the separation membrane.

In the formula (1), $R^2$ may represent an alkylene group having 1 to 3 carbon atoms, and $R^3$, $R^4$ and $R^5$ may each independently represent an alkyl group having 1 to 3 carbon atoms. $X^-$ may be $N(SO_2CF_3)_2^-$.

## [Advantageous Effects]

According to one aspect of the present invention, a separation membrane having excellent separation capability of solvents and lithium ion conductivity, which is used in a lithium ion secondary battery configured to contain mutually different solvents in a positive electrode mixture layer and a negative electrode mixture layer, and a lithium ion secondary battery comprising the separation membrane can be provided.

## [BRIEF DESCRIPTION OF THE DRAWINGS]

FIG. 1 is a perspective view showing a lithium ion secondary battery according to one embodiment; and
FIG. 2 is an exploded perspective view showing one embodiment of an electrode group in the Lithium ion secondary battery shown in FIG. 1.
FIG. 3 is a schematic cross-sectional view showing one embodiment of a separation membrane.

## [DETAILED DESCRIPTION OF THE EMBODIMENTS]

Hereinafter, one embodiment of the present invention is described while appropriately referring to the accompanying drawings. However, the present invention is not limited to the following embodiments.

As used herein, a (meth)acryloyl group means an acryloyl group or a methacryloyl group corresponding thereto. The same applies to other similar expressions such as (meth)acrylate.

FIG. 1 is a perspective view showing a lithium ion secondary battery according to one embodiment. As shown in FIG. 1, a lithium ion secondary battery 1 according to one embodiment is a so-called laminated type secondary battery that comprises an electrode group 2 and a bag-type battery outer packaging body 3 that houses the electrode group 2. The electrode group 2 is provided with a positive electrode current collector tab 4 and a negative electrode current collector tab 5. The positive electrode current collector 4 and the negative electrode current collector tab 5 each protrude from the inside of the battery outer packaging body 3 to the outside, so that the positive electrode current collector and the negative electrode current collector (details will be described later) can be electrically connected to the outside of the lithium ion secondary battery 1. In another embodiment, the lithium ion secondary battery 1 may have a shape such as coin type, cylindrical type, etc. other than a laminated shape.

The battery outer packaging body 3 may be a container formed of, for example, a laminated film. The laminated film may be, for example, a laminated film in which a polymer film such as a polyethylene terephthalate (PET) film, a metal foil such as aluminum, copper, or stainless steel, and a sealant layer such as polypropylene are laminated in the stated order.

FIG. 2 is an exploded perspective view showing one embodiment of an electrode group 2 in the lithium ion secondary battery 1 shown in FIG. 1. As shown in FIG. 2, the electrode group 2 according to one embodiment includes a positive electrode 6, a separation membrane 7, and a negative electrode 8 in the stated order. The positive electrode 6 includes a positive electrode current collector 9 and a positive electrode mixture layer 10 provided on the positive electrode current collector 9. A positive current collector tab 4 is provided on the positive electrode current collector 9. The negative electrode 8 includes a negative electrode current collector 11 and a negative electrode mixture layer 12 provided on the negative electrode current collector 11. A negative electrode collector tab 5 is provided on the negative electrode current collector 11.

The positive electrode current collector 9 is made of, for example, aluminum, titanium, stainless steel, nickel, calcined carbon, conductive polymer, conductive glass, or the like. The thickness of the positive electrode current collector 9 may be, for example, 1 $\mu$m or more and 50 $\mu$m or less.

The negative electrode current collector 11 is formed of, for example, copper, stainless steel, nickel, aluminum, titanium, calcined carbon, conductive polymer, conductive glass, aluminum-cadmium alloy, or the like. The thickness of the negative electrode current collector 11 may be, for example, 1 $\mu$m or more and 50 $\mu$m or less.

The positive electrode mixture layer 10 contains a positive electrode active material, a first lithium salt, and a first solvent.

The positive electrode active material may be, for example, lithium oxide. The lithium oxide includes, for example, $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$ and $Li_xMn_{2-y}M_yO_4$ (in each formula, M represents at least one element selected from the group consisting of Na, Mg, Sc, Y, Mn, Fe, Co, Cu, Zn, Al, Cr, Pb, Sb, V and B (provided that M is an element different from other elements in each formula), x=0~1.2, y=0~0.9, z=2.0~2.3). The lithium oxide represented by $Li_xNi_{1-y}M_yO_z$ may be $Li_xNi_{1-(y1+y2)}Co_{y1}Mn_{y2}O_z$ (provided that x and z are the same as those described above, y1=0~0.9, y2=0~0.9, and y1+y2=0~0.9), and an example thereof may be $LiNi_{1/3}Co_{1/3}Mn_{1/3}O_2$, $LiNi_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$. The lithium oxide represented by $Li_xNi_{1-y}M_yO_z$ may be $Li_xNi_{1-(y3+y4)}Co_{y3}Al_{y4}O_z$(provided that x and z are the same as those described above, y3=0~0.9, y4=0~0.9, and y3+y4=0~0.9), and an example thereof may be $LiNi_{0.8}Co_{0.15}Al_{0.05}O_2$.

The positive electrode active material may be lithium phosphate. Examples of the lithium phosphate include lithium manganese phosphate ($LiMnPO_4$), lithium iron phosphate ($LiFePO_4$), lithium cobalt phosphate ($LiCoPO_4$), and lithium vanadium phosphate ($Li_3V_2(PO_4)_3$). The positive electrode active material mentioned above is used singly or in a combination of two or more types.

The content of the positive electrode active material may be 70% by mass or more, 80% by mass or more, or 85% by mass or more, and 95% by mass or less, 92% by mass or less, or 90% by mass or less based on the total amount of the positive electrode mixture layer.

The first lithium salt may be, for example, at least one selected from the group consisting of $LiPF_6$, $LiBF_4$, $LiClO_4$, LiNOs, $LiB(C_6H_5)_4$, LiCHsSOs, $CF_3SO_2OLi$, $LiN(SO_2F)_2$(LiFSI, lithium bis(fluorosulfonyl)imide), and $LiN(SO_2CF_2CF_3)_2$.

The content of the first lithium salt may be 0.5 mol/L or more, 0.7 mol/L or more, or 0.8 mol/L or more, and 1.5 mol/L or less, 1.3 mol/L or less, or 1.2 mol/L or less based on the total amount of the first solvent.

The first solvent is a solvent for dissolving the first lithium salt. Examples of the first solvent include a cyclic carbonate such as ethylene carbonate, propylene carbonate, vinylene carbonate, vinyl ethylene carbonate, fluoroethylene carbonate, and difluoroethylene carbonate, a chained carbonate such as dimethyl carbonate, diethyl carbonate, and ethyl methyl carbonate, a cyclic ester such as γ-butyrolactone, γ-valerolactone, δ-valerolactone, ε-caprolactone, and γ-hexanolactone, an ether such as tetrahydrofuran, 1,3-dioxane, dimethoxyethane, diethoxyethane, methoxyethoxyethane, glyme, diglyme, triglyme and tetraglyme, a phosphoric acid ester such as a chain sulfone such as dimethyl sulfone and diethyl sulfone, a cyclic sulfone such as sulfolane, a cyclic sulfonic acid ester such as propanesultone, and the like. The first solvent can be used singly or in combination of two or more types.

The first solvent is a solvent having excellent oxidation resistance. The solvent having oxidation resistance includes, for example, acetonitrile, ethylene carbonate, and the like. By using the solvent having oxidation resistance, it is possible to enhance the oxidation resistance of the positive electrode mixture layer 10.

The content of the first solvent contained in the positive electrode mixture layer 10 can be appropriately set within a range in which the first lithium salt can be dissolved, but for example, the content may be 10% by mass or more and 80% by mass or less based on the total amount of the positive electrode mixture layer.

The positive electrode mixture layer 10 may further contain a binder and a conductive material as other components.

The binder may be a polymer containing, as a monomer unit thereof, at least one selected from the group consisting of tetrafluoroethylene, vinylidene fluoride, hexafluoropropylene, acrylic acid, maleic acid, ethyl methacrylate, methyl methacrylate, and acrylonitrile, rubber such as styrene-butadiene rubber, isoprene rubber, acrylic rubber, and like. The binder is preferably polyvinylidene fluoride or a copolymer containing hexafluoropropylene and vinylidene fluoride as the monomer unit.

The content of the binder may be 0.3% by mass or more, 0.5% by mass or more, 1% by mass or more, or 1.5% by mass or more, and 10% by mass or less, 8% by mass or less, 6% by mass or less, or 4% by mass or less, based on the total amount of the positive electrode mixture layer.

The conductive material may be a carbon material such as carbon black, acetylene black, graphite, carbon fiber, or carbon nanotube, and the like. These conductive materials are used singly or in combination of two or more types.

The content of the conductive material may be 0.1% by mass or more, 1% by mass or more, or 3% by mass or more based on the total amount of the positive electrode mixture layer. The content of the conductive material is preferably 15% by mass or less, more preferably 10% by mass or less, and still more preferably 8% by mass or less based on the total amount of the positive electrode mixture layer, from the viewpoint of suppressing the increase in the volume of the positive electrode 6 and the decrease in the energy density of the lithium ion secondary battery 1 associated therewith.

The thickness of the positive electrode mixture layer 10 may be 5 $\mu$m or more, 10 $\mu$m or more, 15 $\mu$m or more, or 20 $\mu$m or more, and 100 $\mu$m or less, 80 $\mu$m or less, or 70 $\mu$m or less.

The negative electrode mixture layer 12 contains a negative electrode active material, a second lithium salt, and a second solvent.

As the negative electrode active material, those commonly used in the field of energy devices can be used. Examples of the negative electrode active materials include metal lithium, lithium titanate ($Li_4Ti_5O_{12}$), lithium alloy or other metal compounds, carbon materials, metal complexes, organic polymer compounds, and the like. These negative electrode active materials are used singly or in combination of two or more types. Examples of the carbon material may include graphite such as natural graphite (flaky graphite, etc.), and artificial graphite, amorphous carbon, carbon fiber, and carbon black such as acetylene black, ketjen black, channel black, furnace black, lamp black, thermal black, and the like. The negative electrode active material may be a negative electrode active material containing silicon as a constituent element, a negative electrode active material containing tin as a constituent element, or the like, from the viewpoint of obtaining a larger theoretical capacity (e.g., 500 to 1500 Ah/kg). Among them, the negative electrode active material may be a negative electrode active material containing silicon as a constituent element.

The negative electrode active material containing silicon as a constituent element may be an alloy containing silicon as a constituent element, and an example thereof may be an alloy containing silicon and at least one selected from the group consisting of nickel, copper, iron, cobalt, manganese, zinc, indium, silver, titanium, germanium, bismuth, antimony and chromium as a constituent element. The negative electrode active material containing silicon as a constituent element may be an oxide, a nitride, or a carbide, and examples thereof may be a silicon oxide such as SiO, $SiO_2$, and LiSiO, a silicon nitride such as $Si_3N_4$ and $Si_2N_2O$, a silicon carbide such as SiC, or the like.

The content of the negative electrode active material may be 60% by mass or more, 65% by mass or more, or 70% by mass or more, and 99% by mass or less, 95% by mass or less, or 90% by mass or less based on the total amount of the negative electrode mixture layer.

The type and content of the second lithium salt can be used if they are identical to those of the above-mentioned first lithium salt. The second lithium salt may be the same as or different from the first lithium salt.

The second solvent is a solvent for dissolving the second lithium salt. As the second solvent, the solvent identical to that used as the first solvent can be used, but a solvent different from the first solvent may be used. Thereby, since suitable solvents can be used for the positive electrode 6 and the negative electrode 8, respectively, it is possible to improve various performances of the lithium ion secondary battery 1, such as improvement of energy density and life.

The second solvent is preferably a solvent having reduction resistant property. The solvent having reduction resistant property includes, for example, $\gamma$-butyrolactone, tetrahydrofuran, and the like. By using the solvent having reduction resistant property, it is possible to suppress reductive decomposition of the second solvent contained in the negative electrode mixture layer 12.

The content of the second solvent contained in the negative electrode mixture layer 12 can be appropriately set within a range in which the second lithium salt can be dissolved, but it may be, for example, 10% by mass or more and 80% by mass or less based on the total amount of the negative electrode mixture layer.

The negative electrode mixture layer 12 may further contain a binder and a conductive material as other components. The types and contents of the binder and the conductive material can be used if they are identical to the types and contents of the binder and the conductive material in the above-mentioned positive electrode mixture layer 10.

The thickness of the negative electrode mixture layer 12 may be 10 $\mu$m or more, 15 $\mu$m or more, or 20 $\mu$m or more, and 100 $\mu$m or less, or 80 $\mu$m or less.

The separation membrane 7 is a separation membrane for being disposed between the positive electrode mixture layer 10 and the negative electrode mixture layer 12 in the lithium ion secondary battery 1. The separation membrane 7 performs the role of separating the first solvent contained in the positive electrode mixture layer 10 and the second solvent contained in the negative electrode mixture layer 12 from each other and thus preventing the first solvent and the second solvent from being mixed with each other. The separation membrane 7 allows exchange of lithium ions.

The separation membrane 7 contains a polymer (hereinafter also referred to as "(meth)acrylate polymer") containing a monomer represented by formula (1) (hereinafter also referred to as "(meth)acrylate monomer") as a monomer unit, and a third lithium salt. The separation membrane 7 contains the above-mentioned (meth)acrylate polymer and third lithium salt, and thus has excellent solvent separation capability and lithium ion conductivity. The lithium ion conductivity means the property of being able to conduct lithium ions derived from the lithium salt in the presence of the lithium salt. Whether or not to conduct lithium ions can be confirmed by measuring the ionic conductivity of the separation membrane 7. For example, if the peak of ion conductivity measured when 1 to 40% by mass of lithium salt is added to the separation membrane 7 is $1\times10^{-6}$ S/cm or more, it can be said to have lithium ion conductivity. FIG. 3 is a schematic cross-sectional view showing one embodiment of the separation membrane 7.

[Chemical Formula 2]

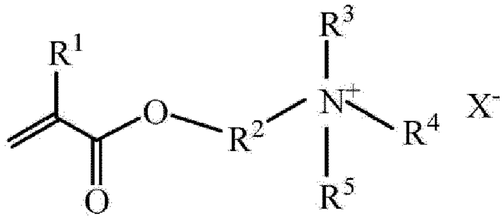

(1)

wherein, in formula (1), $R^1$ represents a hydrogen atom or a methyl group; $R^2$ represents a divalent organic group; $R^3$, $R^4$ and $R^5$ each independently represents a hydrogen atom or a monovalent organic group; and $X^-$ represents a counter anion. $R^3$, $R^4$ and $R^5$ may be the same as or different from each other. From the viewpoint of ensuring better solvent separation capability, $R^3$, $R^4$ and $R^5$ are preferably the same as each other.

From the viewpoint of ensuring better solvent separation capability, $R^1$ is preferably a methyl group. Examples of the divalent organic group represented by $R^2$ include a divalent hydrocarbon group. Examples of the divalent hydrocarbon group include an alkylene group. The number of carbon atoms in the divalent organic group may be 1 to 3 or 1 to 2. From the viewpoint of ensuring better solvent separation capability, $R^2$ is preferably an alkylene group of 1 to 3 carbon atoms, more preferably an alkylene group of 1 to 2 carbon atoms, and still more preferably an ethylene group.

Examples of the monovalent organic group represented by $R^3$, $R^4$ and $R^5$ include a monovalent hydrocarbon group. Examples of the monovalent hydrocarbon group include an alkyl group. The number of carbon atoms in the monovalent organic group may be 1 to 3 or 1 to 2. From the viewpoint of ensuring better solvent separation capability, $R^3$, $R^4$ and $R^5$ are preferably each independently an alkyl group of 1 to 3 carbon atoms, more preferably each independently an alkyl group of 1 to 2 carbon atoms, and still more preferably a methyl group.

Examples of $X^-$ include $PF_6^-$, $BF_4^-$, $ClO_4^-$, $NO_3^-$, $B(C_6H_5)_4^-$, $CH_3SO_3^-$, $CF_3SO_{2O}^-$, $N(SO_2F)_2^-$, $N(SO_2CF_3)_2^-$, $N(SO_2CF_2CF_3)_2^-$ , and the like. X- is preferably the same as the anion of the third lithium salt, and more preferably $N(SO_2CF_3)_2^-$([TFSI]$^-$).

A (meth)acrylate polymer may contain only a (meth)acrylate monomer as a monomer unit, and may also contain a (meth)acrylate monomer and other monomers copolymerizable with the (meth)acrylate monomer as a monomer unit. The (meth)acrylate polymer may be a homopolymer containing only one type of (meth)acrylate monomer as a monomer unit, may be a copolymer containing at least one type of (meth)acrylate monomer and at least one type of other monomer as a monomer unit, and may be a copolymer containing two or more types of (meth)acrylate monomers as monomer units. The content of the (meth)acrylate monomer unit may be 70% by mass or more, 80% by mass or more, 90% by mass or more, or 95% by mass or more based on the total amount of monomer units contained in the (meth)acrylate polymer.

The weight average molecular weight of the (meth)acrylate polymer may be 1000 or more, 5000 or more or 10000 or more, and 200000 or less, 100000 or less or 50000 or less. The weight average molecular weight as used herein is measured using gel permeation chromatography (GPC) under the following conditions, and means a value determined using polystyrene as a standard material.

- Measuring device: HLC-8320GPC (product name, manufactured by Tosoh Corporation)
- Analysis column: TSKgel Super Multipore HZ-H (three connected) (product name, manufactured by Tosoh Corporation)
- Guard column: TSKguardcolumn SuperMP (HZ)-H (product name, manufactured by Tosoh Corporation)
- Eluent: THF
- Measurement temperature: 25°C

The content of the (meth)acrylate polymer may be 80% by mass or more, 82% by mass or more, 84% by mass or more, 86% by mass or more, 87% by mass or more, or 88% by mass or more, and 98% by mass or less, 97% by mass or less, 96% by mass or less, 95% by mass or less, 94% by mass or less, or 93% by mass or less, based on the total amount of the separation membrane. From the viewpoint of ensuring better solvent separation capability, the content of the (meth)acrylate polymer is preferably 84% by mass or more, 86% by mass or more, 87% by mass or more, or 88% by mass or more based on the total amount of the separation membrane.

As the third lithium salt, the same one as the first lithium salt described above can be used. The third lithium salt may be of the same type as the first lithium salt and the second lithium salt described above, or may be of a different type. From the viewpoint of ensuring better lithium ion conductivity, the third lithium salt includes preferably at least one selected from the group consisting of $LiPF_6$, $LiBF_4$, $LiClO_4$, $LiNO_3$, $LiB(C_6H_5)_4$, $LiCH_3SO_3$, $CF_3SO_2OLi$, $LiN(SO_2F)_2$,

$LiN(SO_2CF_3)_2$, and $LiN(SO_2CF_2CF_3)_2$, and more preferably, it includes $LiN(SO_2CF_3)_2$.

The content of the third lithium salt may be 2 mass% or more, 2.5 mass% or more, 3 mass% or more, 3.5 mass% or more, 4 mass% or more, 4.2 mass% or more, 4.4 mass% or more, 4.6 mass% or more, or 4.8 mass% or more, and 20 mass% or less, 15 mass% or less, 14 mass% or less, 13 mass% or less, 12 mass% or less, 11.5 mass% or less, 11 mass% or less, 10.5 mass% or less, or 10 mass% or less, based on the total amount of the separation membrane. From the standpoint of better lithium ion conductivity, the content of the third lithium salt is preferably 3 mass% or more, 3.5 mass% or more, 4 mass% or more, 4.2 mass% or more, 4.4 mass% or more, 4.6 mass% or more, or 4.8 mass% or more based on the total amount of the separation membrane. From the viewpoint of ensuring better solvent separation capability, the content of the third lithium salt is preferably 15 mass% or less, 14 mass% or less, 13 mass% or less, 12 mass% or less, 11.5 mass% or less, 11 mass% or less, 10.5 mass % or less or 10 mass % or less based on the total amount of the separation membrane.

The thickness of the separation membrane 7 is preferably 20 $\mu$m or more, 50 $\mu$m or more, or 100 $\mu$m or more from the viewpoint of further enhancing the solvent separation capability of the separation membrane 7. The thickness of the separator 7 is preferably 2000 $\mu$m or less, 1500 $\mu$m or less, or 1200 $\mu$m or less from the viewpoint of increasing the energy density of the lithium ion secondary battery 1.

The separation membrane 7 can be manufactured, for example, by the following method. That is, the manufacturing method of the separation membrane 7 may comprise a step of mixing a monomer containing the monomer represented by the formula (1), a third lithium salt, and a third solvent to obtain a slurry, a step of applying the obtained slurry to a substrate, drying the applied slurry to remove the third solvent, and a step of polymerizing the monomer by irradiation with light. Such a manufacturing method includes a step of drying the applied slurry to remove the third solvent, thereby being able to obtain the separation membrane 7 having excellent solvent separation capability and lithium ion conductivity. That is, it is preferable that the separation membrane 7 does not contain a solvent.

The third solvent is not particularly limited as long as it is an organic solvent capable of dissolving the third lithium salt. Examples of the third solvent include methyl ethyl ketone (MEK).

Methods for applying the slurry to the substrate include, for example, a method of mounting a frame of arbitrary size on one surface of the substrate and pouring the slurry into the frame, and a method of applying a slurry on one side of the substrate by a coating method such as a doctor blade method, a dipping method, and a spray method. Examples of the substrate include a PET sheet and the like.

A method of drying the slurry to remove the solvent includes, for example, a method of heating the slurry, and the like.

A photopolymerization initiator may be added to the slurry to polymerize the monomer. Examples of the photopolymerization initiator include 2-hydroxy-2-methyl-1-phenylpropanone and diphenyl(2,4,6-trimethylbenzoyl)phosphine oxide.

When adding a photopolymerization initiator, the content of the photopolymerization initiator may be 0.01 parts by mass or more, 0.05 parts by mass or more, 0.1 parts by mass or more, or 1 part by mass or more, and 15 parts by mass parts or less, 10 parts by mass or less, or 5 parts by mass or less with respect to 100 parts by mass of the monomer.

Examples of the method of polymerizing the monomer by irradiation with light include a method of irradiating light under predetermined conditions. In one embodiment, the monomer may be polymerized by irradiation with light (ultraviolet light) containing wavelengths within the range of 200-400 nm.

Subsequently, the manufacturing method of the lithium ion secondary battery 1 is described. A method for manufacturing a lithium ion secondary battery 1 according to one embodiment comprises a step of obtaining a positive electrode 6 comprising a positive electrode mixture layer 10 that contains a positive electrode active material, a first lithium salt, and a first solvent, a step of obtaining a negative electrode 8 comprising a negative electrode mixture layer 12 that contains a negative electrode active material, a second lithium salt, and a second solvent different from the first solvent, and a step of mounting the separation membrane 7 between the positive electrode 6 and the negative electrode 8. The order of each step is arbitrary.

In the manufacturing method, specific aspects of the positive electrode active material, the first lithium salt, the first solvent, the negative electrode active material, the second lithium salt, the second solvent, and the separation membrane 7 are as described above.

In the step of obtaining the positive electrode 6 and the step of obtaining the negative electrode 8, the positive electrode 6 and the negative electrode 8 can be obtained using a known method. For example, the material used for the positive electrode mixture layer 10 or the negative electrode mixture layer 12 is dispersed in an appropriate amount of dispersion medium using a kneader, a disperser, or the like to obtain a slurry-like positive electrode mixture or negative electrode mixture. Then, the positive electrode mixture or the negative electrode mixture is applied onto the positive electrode current collector 9 or the negative electrode current collector 11 by a doctor blade method, a dipping method, a spray method, or the like, and the dispersion medium is volatilized, thereby obtaining a positive electrode 6 and a negative electrode 8. The dispersion medium may be water, N-methyl-2-pyrrolidone (NMP), or the like.

The step of mounting the separation membrane 7 between the positive electrode 6 and the negative electrode

8 may comprise a step of manufacturing the above-mentioned separation membrane 7. In this case, after obtaining the separation membrane 7, the positive electrode 6, the separation membrane 7 and the negative electrode 8 are laminated, for example, by lamination, thereby obtaining an electrode group 2 that comprises the positive electrode 6, the separation membrane 7 and the negative electrode 8 in the stated order. Further, the electrode group 2 can be housed in the battery outer packaging body 3 to obtain the lithium ion secondary battery 1.

## EXAMPLE

Hereinafter, the present invention will be described in more detail with reference to examples, but the present invention is not limited to these examples.

[Example 1]

3.6g of Monomer represented by formula (1) (wherein, $R^1$, $R^3$, $R^4$ and $R^5$ are methyl groups, $R^2$ is ethylene groups, and X- is [TFSI]), 0.19g of lithium salt (Li[TFSI]), 0.1g of a photopolymerization initiator (2-hydroxy-2-methylpropiophenone, available from Fujifilm Wako Pure Chemical Corporation), and 2.4 g of a solvent (methyl ethyl ketone) were added to a brown screw tube, and mixed with a stirrer for 1 hour to obtain a slurry. A silicone rubber frame (4 cm $\times$ 4 cm, thickness: 1 mm) was mounted on a PET sheet (8 cm $\times$ 8 cm, thickness: 0.035 mm), the slurry was placed in the frame, and then dried at 100°C for 30 minutes to remove the solvent. Then, UV was irradiated at an irradiation distance of 30 cm and an illuminance of approximately 335 $mW/cm^2$ using a UV irradiator for 3 minutes to polymerize the monomer, thereby manufacture a separation membrane. The separation membrane was removed from the frame and provided for the test described below.

[Example 2]

A separation membrane was manufactured in the same manner as in Example 1, except that in Example 1, the amount of the monomer was changed to 4.6 g, and the amount of the lithium salt was changed to 0.52 g.

<Evaluation of Solvent Separation Capability>

A separation membrane obtained in Examples, and a separator (UP3085 available from Ube Industries Ltd.) were overlapped, and sandwiched between two silicone rubber sheets (thickness: 0.5 mm), which were placed between H-type cells. Dimethyl carbonate (DMC) was put into the cell on the separation membrane side, and the appearance of the separation membrane was visually observed after a predetermined number of days had passed. If the separator membrane is excellent in solvent separation capability, DMC hardly penetrates the separation membrane, which makes it difficult for DMC to penetrate the separation membrane. On the other hand, if the separation membrane is inferior in solvent separation capability, DMC permeates the separation membrane and permeates into the separator. Therefore, by observing the appearance of the separator and confirming whether or not DMC has permeated the separator, it is possible to evaluate the separation capability of the solvents (solvents corresponding to the first solvent and the second solvent) of the separation membrane. When there is no permeation of DMC into the separator even after one day from the start of the test, it is indicated as "≧1 day" in Table 1. In this case, the solvent separation capability of the separation membrane can be said to be excellent. As shown in Table 1, in the separation membranes obtained in Examples, DMC did not permeate into the separator even after one day or more.

<Evaluation of Ionic Conductivity>

Test cells were fabricated using the separation membranes obtained in Examples, thereby evaluating the ionic conductivity of the separation membranes. First, an upper cover (CR2032 cap available from Hohsen Corp.), a 1.6mm thick plate spring, a 1.0mm thick SUS spacer (2 sheets), a separation membrane, a gasket, a lower cover (CR2032 case available from Hohsen Corp.) were laminated in the stated order, the upper cover and the lower cover were caulked to fabricate a test cell.

Next, the bulk resistance of the separation membrane was measured. The measurement device and measurement conditions were as follows.

Measurement device: VSP electrochemical measurement system (available from BioLogic)
Measurement temperature: 80°C
AC amplitude: 10mV
Frequency range: 10mHz to 1MHz

After the measurement, the ionic conductivity of the separation membrane was calculated according to the following formula ($\alpha$).

$$\sigma = L/RA \quad (\alpha)$$

$\sigma$ (S/cm): ionic conductivity
L (cm): thickness of separation membrane
R ($\Omega$): bulk resistance
A ($cm^2$): cross-sectional area of SUS spacer

[Table 1]

| | Example 1 | Example 2 |
|---|---|---|
| Solvent separation capability | ≥ 1 day | |
| Ionic conductivity (unit: mS/cm) | 0.001 | 0.011 |

[Description of Reference Numerals]

| | | | |
|---|---|---|---|
| 1: | lithium ion secondary battery | 2: | electrode group |
| 3: | battery outer packaging body tab | 4: | positive electrode current collector |
| 5: | negative current collector tab | 6: | positive electrode |
| 7: | separation membrane | 8: | negative electrode |
| 9: | positive current collector | 10: | positive electrode mixture layer |
| 11: | negative current collector | 12: | negative electrode mixture layer |

## Claims

**1.** A lithium ion secondary battery comprising a positive electrode mixture layer, a separation membrane, and a negative electrode mixture layer in the stated order, wherein:

the positive electrode mixture layer contains a positive electrode active material, a first lithium salt, and a first solvent,
the negative electrode mixture layer contains a negative electrode active material, a second lithium salt, and a second solvent different from the first solvent, and
the separation membrane contains a third lithium salt and a polymer that comprises, as a monomer unit, a monomer represented by formula (1):

[Chemical Formula 1]

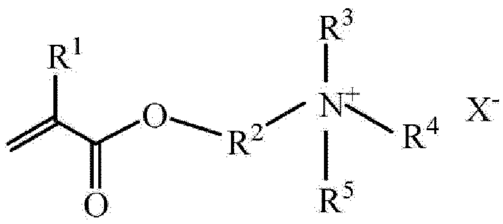

(1)

[wherein, in formula (1), $R^1$ represents a hydrogen atom or a methyl group, $R^2$ represents a divalent organic group, $R^3$, $R^4$ and $R^5$ each independently represents a hydrogen atom or a monovalent organic group, and $X^-$ represents a counter anion.]

**2.** The lithium ion secondary battery according to claim 1, wherein:

the third lithium salt comprises $LiN(SO_2CF_3)_2$.

**3.** The lithium ion secondary battery according to claim 1 or 2, wherein: a content of the third lithium salt is 10% by mass or less based on the total amount of the separation membrane.

**4.** The lithium ion secondary battery according to any one of claim 1 to 3, wherein: in the formula (1), $R^2$ represents an alkylene group having 1 to 3 carbon atoms, and $R^3$, $R^4$ and $R^5$ each independently represents an alkyl group having 1 to 3 carbon atoms.

**5.** The lithium ion secondary battery according to any one of claim 1 to 4, wherein: in the formula (1), $X^-$ is $N(SO_2CF_3)_2^-$.

**6.** The lithium ion secondary battery according to any one of claim 1 to 5, wherein: in the formula (1), $R^2$ represents an alkylene group having 1 to 3 carbon atoms, $R^3$, $R^4$ and $R^5$ each independently represents an alkyl group having 1 to 3 carbon atoms, and $X^-$ is $N(SO_2CF_3)_2^-$.

**7.** A separation membrane for being disposed between a positive electrode mixture layer and a negative electrode mixture layer, in a lithium ion secondary battery comprising a positive electrode mixture layer that contains a positive electrode active material, a first lithium salt and a first solvent, and a negative electrode mixture layer that contains a negative electrode active material, a second lithium salt and a second solvent different from the first solvent, wherein the separation membrane contains a third lithium salt and a polymer that comprises, as a monomer unit, a monomer represented by formula (1),

[Chemical Formula 2]

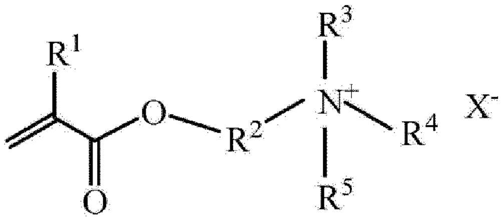

(1)

[wherein, in formula (1), $R^1$ represents a hydrogen atom or a methyl group, $R^2$ represents a divalent organic group, $R^3$, $R^4$ and $R^5$ each independently represents a hydrogen atom or a monovalent organic group, and $X^-$ represents a counter anion.]

**8.** The separation membrane according to claim 7, wherein: the third lithium salt comprises $LiN(SO_2CF_3)_2$.

**9.** The separation membrane according to claim 7 or 8, wherein: a content of the third lithium salt is 10% by mass or less based on the total amount of the separation membrane.

**10.** The separation membrane according to any one of claim 7 to 9, wherein: in the formula (1), $R^2$ represents an alkylene group having 1 to 3 carbon atoms, and $R^3$, $R^4$ and $R^5$ each independently represents an alkyl group having 1 to 3 carbon atoms.

**11.** The separation membrane according to any one of claim 7 to 10, wherein: in the formula (1), $X^-$ is $N(SO_2CF_3)_2^-$.

**12.** The separation membrane according to any one claim 7 to 11, wherein: in the formula (1), $R^2$ represents an alkylene group having 1 to 3 carbon atoms, $R^3$, $R^4$ and $R^5$ each independently represents an alkyl group having 1 to 3 carbon atoms, and $X^-$ is $N(SO_2CF_3)_2^-$.

【FIG. 1】

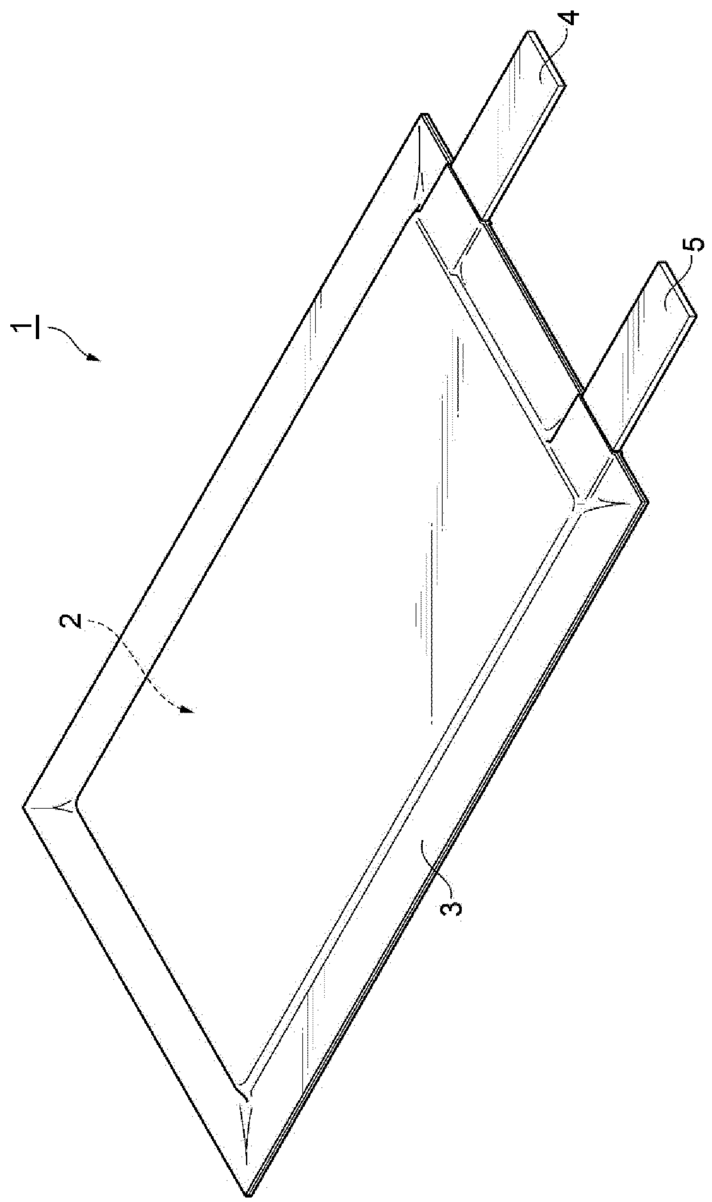

【FIG. 2】

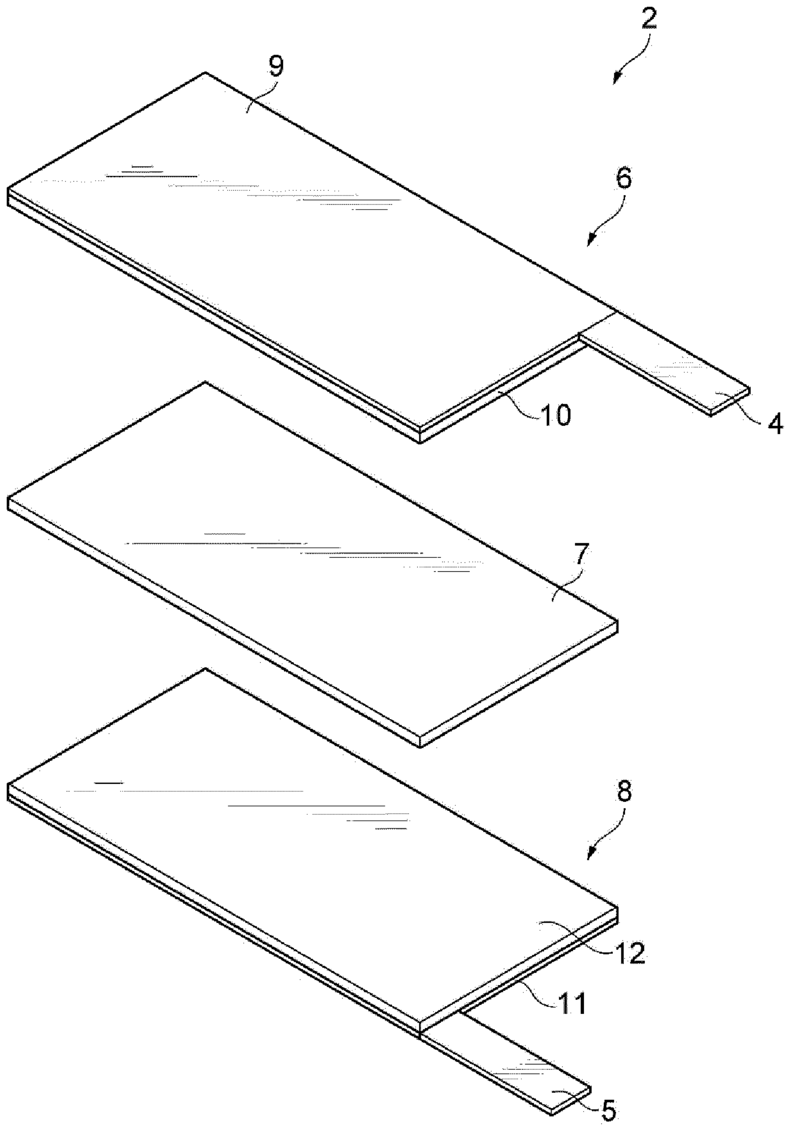

【FIG. 3】

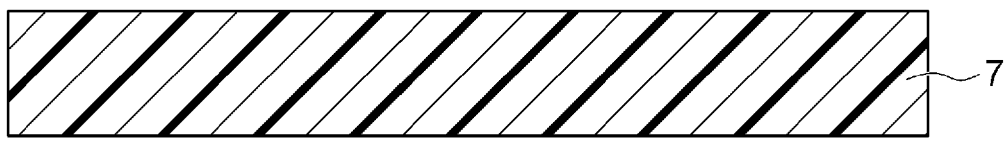

**INTERNATIONAL SEARCH REPORT**

International application No.
PCT/JP2021/014933

A. CLASSIFICATION OF SUBJECT MATTER
H01M 10/0569(2010.01)i; H01M 4/62(2006.01)i; H01M 50/42(2021.01)i; H01M 50/46(2021.01)i
FI: H01M10/0569; H01M4/62 Z; H01M50/42; H01M50/46
According to International Patent Classification (IPC) or to both national classification and IPC

B. FIELDS SEARCHED
Minimum documentation searched (classification system followed by classification symbols)
H01M10/0569; H01M4/62; H01M50/42; H01M50/46

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2017-59350 A (TORAY BATTERY SEPARATOR FILM) 23 March 2017 (2017-03-23) | 1-12 |
| A | JP 2014-35832 A (KYORITSU KAGAKU SANGYO KK) 24 February 2014 (2014-02-24) | 1-12 |
| A | JP 2012-522333 A (ZPOWER, LLC) 20 September 2012 (2012-09-20) | 1-12 |
| A | JP 2005-322597 A (SONY CORP) 17 November 2005 (2005-11-17) | 1-12 |
| A | JP 2002-319434 A (SHARP CORP) 31 October 2002 (2002-10-31) | 1-12 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 June 2021 (17.06.2021) | 29 June 2021 (29.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/014933

| Patent Documents referred in the Report | Publication Date | Patent Family | Publication Date |
|---|---|---|---|
| JP 2017-59350 A | 23 Mar. 2017 | (Family: none) | |
| JP 2014-35832 A | 24 Feb. 2014 | (Family: none) | |
| JP 2012-522333 A | 20 Sep. 2012 | US 2012/0189896 A1<br>WO 2010/111087 A1 | |
| JP 2005-322597 A | 17 Nov. 2005 | (Family: none) | |
| JP 2002-319434 A | 31 Oct. 2002 | US 2005/0074675 A1<br>WO 02/087004 A1<br>TW 543223 B<br>CN 1504000 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001110447 A